# EUROPEAN PATENT SPECIFICATION

(11) **EP 3 065 455 B1**
(45) Date of publication and mention of the grant of the patent: **09.01.2019**
(21) Application number: 14858614.2
(22) Date of filing: 21.10.2014
(51) Int. Cl.: H04W 28/08, H04W 92/12, H04W 92/14

(54) **COMMUNICATION SYSTEM, RADIO BASE STATION, TRAFFIC LOAD DISTRIBUTION METHOD, AND STORAGE MEDIUM ON WHICH PROGRAM HAS BEEN STORED**
KOMMUNIKATIONSSYSTEM, FUNKBASISSTATION, VERKEHRSLASTVERTEILUNGSVERFAHREN UND SPEICHERMEDIUM MIT EINEM DARAUF GESPEICHERTEN PROGRAMM
SYSTÈME DE COMMUNICATION, STATION DE BASE RADIO, PROCÉDÉ DE RÉPARTITION DE CHARGE DE TRAFIC, ET SUPPORT DE STOCKAGE CONTENANT UN PROGRAMME

(30) Priority: 28.10.2013 JP 2013222923
(43) Date of publication of application: 07.09.2016
(73) Proprietor: NEC Corporation, Tokyo 108-8001 (JP)
(72) Inventor: WATANABE, Tomohiro, Tokyo 108-8001 (JP); MATSUNAGA, Yasuhiko, Tokyo 108-8001 (JP); NAKATA, Atsushi, Tokyo 108-8001 (JP)
(74) Representative: MacDougall, Alan John Shaw
(86) International application number: PCT/JP2014/005328
(87) International publication number: WO 2015/064053

(56) References cited:
- EP-A1- 2 395 701
- EP-A1- 2 445 246
- WO-A1-2012/073316
- GB-A- 2 404 114
- JP-A- 2012 253 622
- JP-A- 2013 522 941
- INTERDIGITAL COMMUNICATIONS ET AL.: 'Discussion of stage 1 use cases & requirements' 3GPP TSG-SA WG2 MEETING #95 S 2-130388 pages 1 - 3, XP050684921
- ORANGE: 'Load information exchange for the load balancing use case' 3GPP TSG-RAN WG3 MEETING #59 R3-080255 15 February 2008, pages 1 - 5, XP050163468

## Description

### [Technical Field]

The present invention relates to a communication system, a radio base station, a traffic load distribution method, and a storage medium storing a traffic load distribution program, that distribute traffic loads among base stations.

### [Background Art]

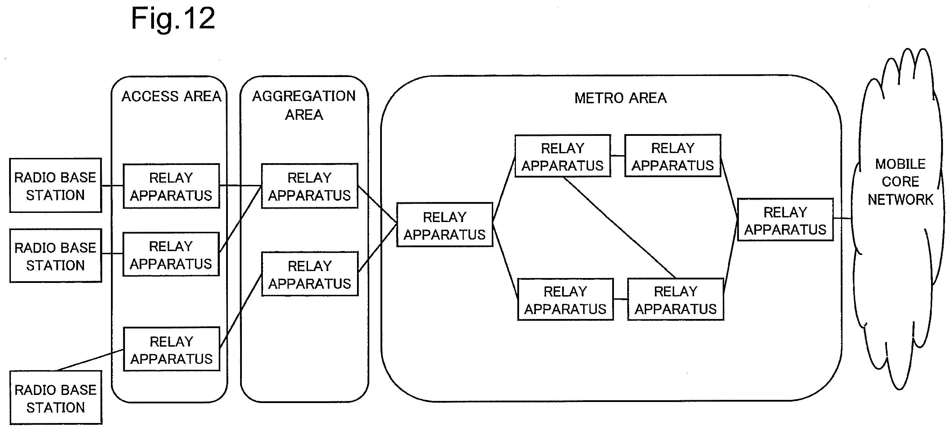

A backhaul (hereinafter, referred to as a mobile backhaul) between radio base stations and a mobile core network may include a plurality of links. Fig. 12 is a block diagram illustrating one example of the mobile backhaul. The mobile backhaul is divided into an access link, an aggregation link, and a metro link. The access link is a link that accommodates a radio base station connected to a relay apparatus disposed in an access area. The aggregation link is a link that accommodates a plurality of radio base stations connected to relay apparatuses disposed in the access area and a radio base station (not illustrated in Fig. 12) disposed in an aggregation area. The metro link is a link in a metro area and is a link to transfer a large amount of mobile data traffic of the plurality of radio base stations transferred via the aggregation link to a mobile core network. Hereinafter, a communication resource in the backhaul will be referred to as a backhaul resource. Further, a traffic load in the backhaul resource will be referred to as a backhaul resource load.

As a method for distributing backhaul resource loads, there is, for example, MLB (Mobility Load Balancing) executed between eNBs (evolved Node Bs). The eNB is a radio base station corresponding to LTE (Long Term Evolution). MLB is executed in accordance with procedures indicated in 1 to 4 described below.
1. Via an X2 link between eNBs, there is executed resource status reporting processing, specifically, Resource Status Reporting Initiation Procedure described in technical specifications (TS 36.423 Version 11.5.0) of 3GPP (3rd Generation Partnership Project).

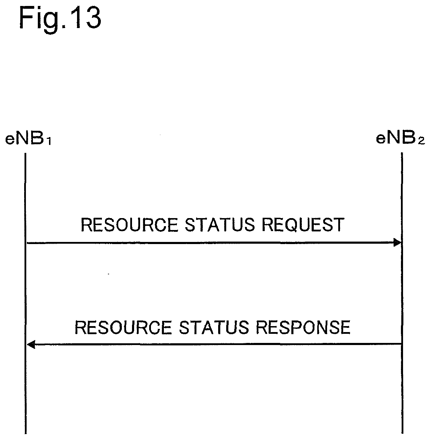

   Fig. 13 is a sequence diagram illustrating resource status reporting processing between eNBs. In the resource status reporting processing, as illustrated in Fig. 13, a resource status request message (X2: RESOURCE STATUS REQUEST message) is transmitted from an eNB 1 to an eNB adjacent thereto (hereinafter, referred to as an adjacent eNB), i.e. an eNB 2. Then, from the eNB 2 to the eNB 1, a response message (X2: RESOURCE STATUS RESPONSE message) to the resource status request message is transmitted.

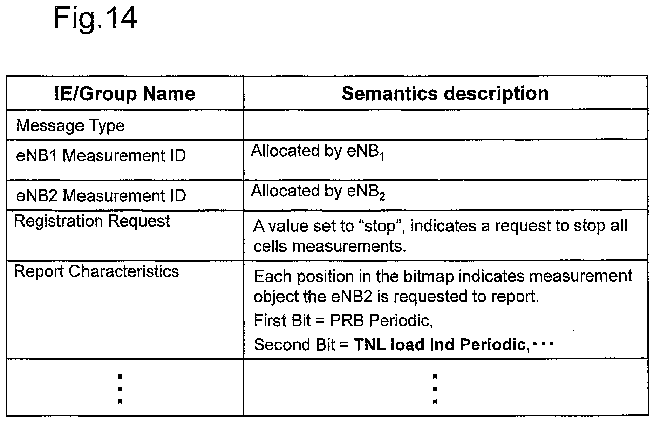

   Fig. 14 is an illustrative diagram illustrating a structure of the resource status request message. The eNB 1 designates load information of the adjacent eNB (eNB 2) that establishes an X2 link as a measurement object in the resource status request message. Specifically, as illustrated in Fig. 14, the eNB 1 designates "TNL (Transport Network Layer) load Ind Periodic" as the parameter "Report Characteristics (measurement object items)" of the resource status request message. Thereby, the eNB 1 becomes able to periodically receive load information of the eNB 2. In "Report Characteristics," up to four pieces of load information can be designated. In the present example, as one thereof, "TNL load Ind Periodic" is included.
2. The eNB 1 receives a resource status update message (X2: RESOURCE STATUS UPDATE message) from the adjacent eNB.

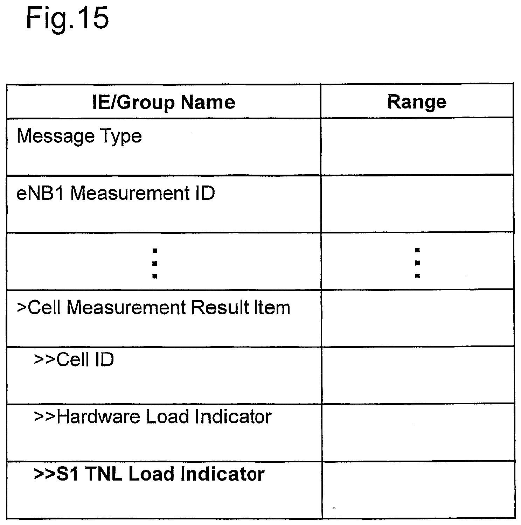

   Fig. 15 is an illustrative diagram illustrating a structure of the resource status update message. The resource status update message received by the eNB 1 includes "S1 TNL Load Indicator" as illustrated in Fig. 15. "S1 TNL Load Indicator" is load information of an S1 transport network layer (hereinafter, referred to as S1 network load information). The S1 network load information is information indicating a backhaul resource load of a link, i.e. an access link between an eNB and a first-hop relay apparatus from the eNB. A value of the S1 network load information is indicated by any one of four stages of "LowLoad," "MediumLoad," "HighLoad," and "Overload."
3. The eNB 1 changes, when a load of TNL exceeds a certain threshold, a handover attribute value (a value of a parameter for controlling Handover described in the technical specifications) to switch a cell where a radio terminal is located from a cell of the eNB 1 to a cell of an adjacent eNB having a low load, i.e. to execute Handover. At that time, the eNB 1 designates the cell of the adjacent eNB having a low load as a handover destination on the basis of the S1 network load information received from the adjacent eNB. Herein, it is assumed that the eNB 1 designates a cell of the eNB 2.
4. The eNB 1 handovers the cell where the radio terminal is located from the cell of the eNB 1 to the cell of the eNB 2 to distribute the backhaul resource load.

PTL 1 describes a technique rendering route selection processing for appropriately distributing traffic possible by adding congestion information of lines to a load distribution processing condition in an IP network.

PTL 2 discloses a radiocommunication network comprising a core network CN including primary and secondary nodes and a radio access network RAN including radio controllers, each primary node connecting at least one secondary node and each secondary node connecting at least one radio controller via respective links. For a given primary node, respective target CN load reduction values are calculated for the links connecting the given primary node and secondary nodes, depending on an excess value between a current load of the given primary node and a primary node load threshold, and respective target RAN load reduction values for the links connecting said secondary nodes connected to the given primary node and radio controllers, depending on calculated target CN load reduction values. Actions for changing traffic distribution take account of calculated target RAN load reduction values.

### [Citation List]

### [Patent Literature]

[PTL 1] Japanese Laid-open Patent Publication No. 2005-252766
[PTL 2] European Patent Publication No. 2 395 701 A1.

### [Technical Problem]

Here, it is assumed that the eNB 1 and the eNB 2 use access links differing from each other. Further, it is assumed that aggregation links located ahead of the access links used by the eNB 1 and the eNB 2, respectively, are the same and also, in the aggregation link, a backhaul resource load increases and congestion occurs.

When a backhaul resource load of the access link used by the eNB 1 is high and a backhaul resource load of the access link used by the eNB 2 is low, a load distribution function works in each eNB. In other words, the procedures 3 to 4 are executed. Thereby, the cell where the radio terminal is located is handovered from the cell of the eNB 1 to the cell of the eNB 2. As a result, the backhaul resource loads in the access links are distributed. However, in the aggregation link, the backhaul resource load is unchanged and therefore, congestion is not eliminated. Therefore, it is difficult to avoid a throughput decrease of the radio terminal in the cell of the eNB 2 of the handover destination. The reason is that a value indicated by "S1 TNL Load Indicator" included in the resource status update message indicates a backhaul resource load of the access link. In other words, load distribution considering load information of the aggregation link is not executed.

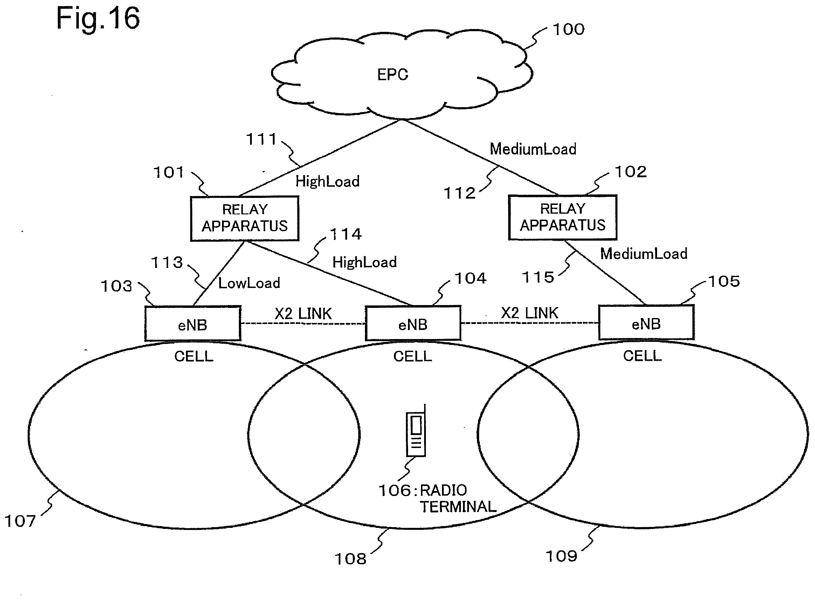

Fig. 16 is a block diagram illustrating an outline of a radio communication network. In the radio communication network illustrated in Fig. 16, radio base stations (eNBs 103 to 105) are connected to an EPC (Evolved Packet Core) network (hereinafter, referred to simply as an EPC) 100 via links 111 to 115 and relay apparatuses 101 to 102. The eNB 103 and the eNB 104 are connected to the relay apparatus 101. The eNB 105 is connected to the relay apparatus 102. Further, the relay apparatuses 101 to 102 are connected to the EPC 100. The eNB 103 and the eNB 104, and the eNB 104 and the eNB 105 are connected via an X2 link, respectively.

Here, it is assumed that a radio terminal 106 is located in a cell of the eNB 104 (a cell 108 illustrated in Fig. 16). The radio terminal 106 is connected to the EPC 100 via the eNB 104 and the relay apparatus 101. Further, a state of a backhaul resource load in the link 111 that connects the EPC 100 and the relay apparatus 101 is "HighLoad." A state of a backhaul resource load in the link 112 that connects the EPC 100 and the relay apparatus 102 is "MediumLoad." A state of a backhaul resource load in the link 113 that connects the relay apparatus 101 and the eNB 103 is "LowLoad." A state of a backhaul resource load in the link 114 that connects the relay apparatus 101 and the eNB 104 is "HighLoad." A state of a backhaul resource load in the link 115 that connects the relay apparatus 102 and the eNB 105 is "MediumLoad."

For example, "S1 TNL Load Indictor," i.e. a value of S1 network load information received by the eNB 104 from the eNB 103 indicates the backhaul resource load of the link 113. Therefore, the eNB 104 acquires "LowLoad" as the value of S1 network load information of the eNB 103. In the similar manner, a value of S1 network load information received by the eNB 103 from the eNB 104 is "HighLoad." Further, a value of S1 network load information received by the eNB 104 from the eNB 105 is "MediumLoad."

It is assumed that the eNB 103, the eNB 104, and the eNB 105 share respective pieces of load information and the eNBs determine which adjacent cell is designated as a handover destination of the radio terminal 106 on the basis of values indicated by the respective pieces of load information. Herein, the eNBs are assumed to share only S1 network load information. At that time, when a load of the eNB 104 increases to some extent, the eNB 104 determines a cell of the eNB 103 (a cell 107 illustrated in Fig. 16) as a handover destination since the value of S1 network load information of the eNB 103 is "LowLoad."

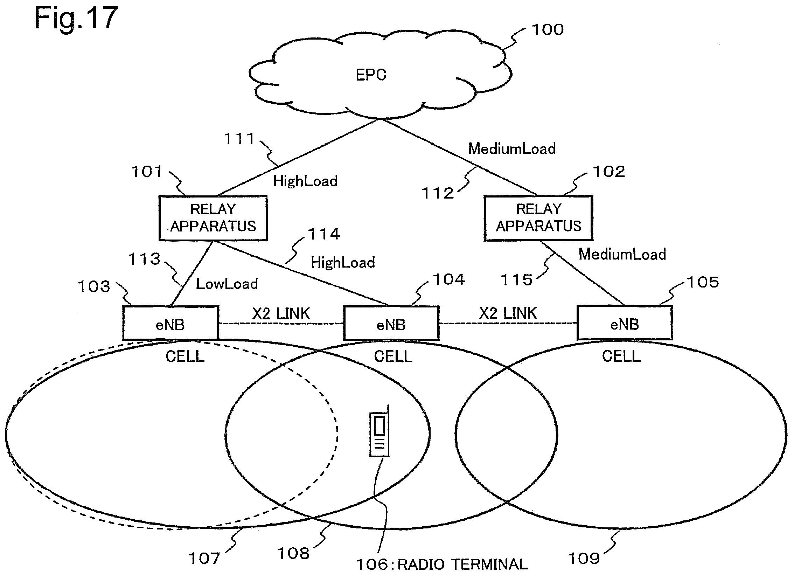

Fig. 17 is an illustrative diagram illustrating how the eNBs 103 to 104 handover a radio terminal from a cell where the radio terminal is located (the cell 108) to another cell (the cell 107). As illustrated in Fig. 17, in order to easily handover the radio terminal 106 from the cell 108 to the cell 107, the eNB 103 and the eNB 104 cooperate to change a setting of a handover attribute value. In other words, the eNB 103 and the eNB 104 each change a setting of a handover attribute value and move a handover boundary to cause the cell 107 to become a handover destination. An area of the cell 107 prior to the change of the handover attribute value is illustrated using a dashed line in Fig. 17. When the radio terminal 106 is located in the cell 107, a backhaul resource load of the link 114 is reduced and a backhaul resource load of the link 113 is increased. Thereby, the loads are distributed between the link 113 and the link 114. However, a backhaul resource load of the link 111 in which those of the link 113 and the link 114 are aggregated is originally "HighLoad." Therefore, even when the loads are distributed between the link 113 and the link 114, the load of the link 111 is not reduced and remains "HighLoad." Therefore, even when the cell where the radio terminal 106 is located is handovered, it may be difficult to avoid a throughput decrease of the radio terminal 106.

As an optimization method of MLB, there is "Enhanced Mobility Load Balancing Optimization in LTE" presented by NSN (Nokia Solutions and Networks) at an international symposium (2012 IEEE 23rd International Symposium on Personal, Indoor and Mobile Radio Communications-(PIMRC)). In this optimization method, a cell of a handover destination is determined on the basis of a frequency band utilizable for each adjacent radio base station. Here, the frequency band utilizable for each adjacent radio base station is defined by a difference between all of the transport capacities allocated to radio base stations and a GBR (Guaranteed Bit Rate) sum of active bearers. The GBR sum of active bearers is a sum of GBRs of the active bearers including a communication overhead based on S1 Interface protocol.

The optimization method uses a transport capacity considering only a backhaul resource load of a link between a radio base station and a first-hop relay apparatus from the radio base station, i.e. an access link. Therefore, the optimization method does not consider a backhaul resource load of an aggregation link located ahead of the access link. A case in which a backhaul resource load of the aggregation link located ahead of the access link is considered and a case in which the above matter is not considered are different in a frequency band defined by a difference between a transport capacity and a GBR sum of active bearers. As a result, even when on the basis of the optimization method, MBL is executed between radio base stations, it is difficult to avoid aggregation link congestion and a throughput decrease of a radio terminal.

### [Summary of Invention]

The present invention provides a communication system, a radio base station, a traffic load distribution method, and a storage medium as disclosed in the appended independent claims. Optional, but advantageous features are disclosed in the appended dependent claims.

A communication system, according to the present invention, comprises radio base stations and a management control apparatus.

The management control apparatus includes:
a first communication means for collecting backhaul resource load information indicating traffic loads of respective links in a backhaul between the radio base stations and a core network from relay apparatuses that relay communications between the radio base stations and the core network;
an operation means for extracting, for each radio base station, a bottleneck link having the highest load among respective links in a backhaul between a radio base station and the core network on the basis of the backhaul resource load information collected by the first communication means; and
a second communication means for transmitting backhaul resource load information of the bottleneck link to the radio base stations.

Each radio base station includes:
an execution means for executing distribution of traffic loads among the radio base stations on the basis of backhaul resource load information of a bottleneck link in a backhaul between an own station and the core network received from the management control apparatus.

A radio base station, according to the present invention, comprises:
a communication means for receiving, from a management control apparatus that manages communication resources in a backhaul between radio base stations and a core network, backhaul resource load information of respective links in a backhaul between an own station and the core network;
an operation means for extracting a bottleneck link having the highest load among respective links in a backhaul between an own station and the core network on the basis of the backhaul resource load information received from the management control apparatus; and
an execution means for executing distribution of traffic loads among the radio base stations on the basis of backhaul resource load information of the bottleneck link.

A traffic load distribution method, according to the present invention, comprises:
receiving, from a management control apparatus that manages communication resources in a backhaul between radio base stations and a core network, backhaul resource load information of respective links in a backhaul between an own station and the core network;
extracting a bottleneck link having the highest load among respective links in a backhaul between an own station and the core network on the basis of the backhaul resource load information received from the management control apparatus; and
executing distribution of traffic loads among the radio base stations on the basis of backhaul resource load information of the bottleneck link.

A storage medium, according to the present invention, stores a traffic load distribution program, that causes
a computer to execute:
processing for receiving, from a management control apparatus that manages communication resources in a backhaul between radio base stations and a core network, backhaul resource load information of respective links in a backhaul between an own station and the core network;
processing for extracting a bottleneck link having the highest load among respective links in a backhaul between an own station and the core network on the basis of the backhaul resource load information received from the management control apparatus; and
processing for executing distribution of traffic loads among the radio base stations on the basis of backhaul resource load information of the bottleneck link.

### [Advantageous Effects of Invention]

According to the present invention, it is possible to avoid backhaul congestion and a throughput decrease of a terminal.

### [Brief Description of Drawings]

[Fig. 1] Fig. 1 is a block diagram illustrating a configuration of a first exemplary embodiment of a radio communication system according to the present invention.
[Fig. 2] Fig. 2 is a block diagram illustrating a configuration of the first exemplary embodiment of a radio base station according to the present invention.
[Fig. 3] Fig. 3 is a block diagram illustrating a configuration of the first exemplary embodiment of a management control apparatus according to the present invention.
[Fig. 4] Fig. 4 is an illustrative diagram illustrating one example of information representing a conversion algorism to convert backhaul resource load information to S1 network load information.
[Fig. 5] Fig. 5 is a flowchart illustrating operations from collecting backhaul resource load information of respective links for an eNB to extracting a bottleneck link using an NMS.
[Fig. 6] Fig. 6 is an illustrative diagram illustrating one example of backhaul resource load information of respective links between an eNB and an EPC.
[Fig. 7] Fig. 7 is a sequence diagram illustrating an operation for transmitting backhaul resource load information after conversion to an eNB using an NMS.
[Fig. 8] Fig. 8 is a block diagram illustrating a configuration of a second exemplary embodiment of a radio base station according to the present invention.
[Fig. 9] Fig. 9 is an illustrative diagram illustrating one example of a structure of a resource status request message designated with additive IEs.
[Fig. 10] Fig. 10 is a block diagram illustrating a minimal configuration of the communication system according to the present invention.
[Fig. 11] Fig. 11 is a block diagram illustrating a minimal configuration of the radio base station according to the present invention.
[Fig. 12] Fig. 12 is a block diagram illustrating one example of a mobile backhaul.
[Fig. 13] Fig. 13 is a sequence diagram illustrating resource status reporting processing between eNBs.
[Fig. 14] Fig. 14 is an illustrative diagram illustrating a structure of a resource status request message.
[Fig. 15] Fig. 15 is an illustrative diagram illustrating a structure of a resource status update message.
[Fig. 16] Fig. 16 is a block diagram illustrating an outline of a radio communication network.
[Fig. 17] Fig. 17 is an illustrative diagram illustrating how an eNB handovers a radio terminal from a cell where the radio terminal is located to another cell.

### [Description of Embodiments]

### First Exemplary Embodiment

A first exemplary embodiment of the present invention will be described with reference to the drawings.

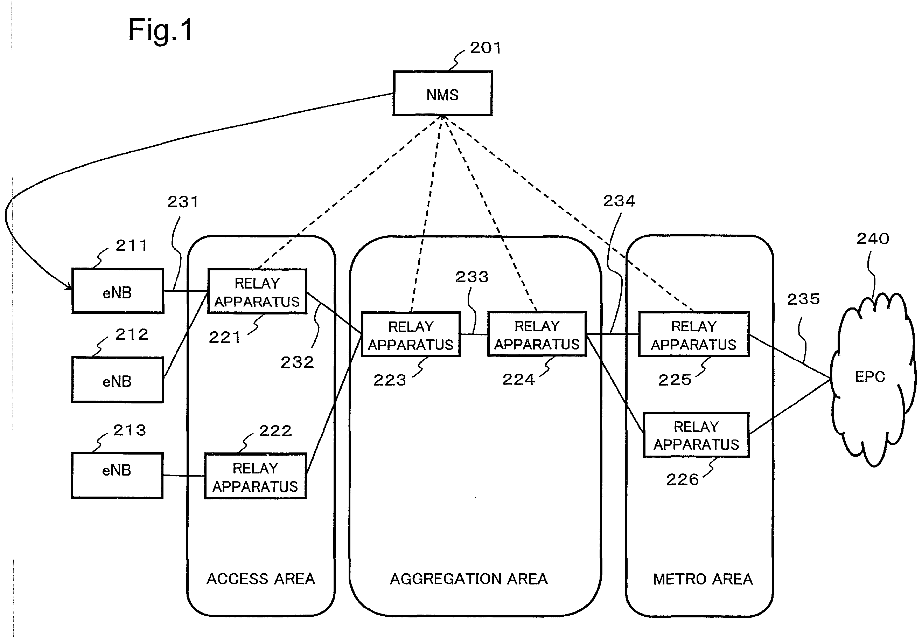

Fig. 1 is a block diagram illustrating a configuration of the first exemplary embodiment of a radio communication system according to the present invention. The radio communication system illustrated in Fig. 1 includes a management control apparatus (hereinafter, referred to as an NMS (Network Management System)) 201 that manages backhaul resources and radio base stations (eNBs 211 to 213). The eNBs 211 to 213 are connected to an EPC 240 via relay apparatuses 221 to 226. The NMS 201 is communicable to each eNB. Further, the NMS 201 is communicable to each relay apparatus. It should be noted that in Fig. 1, three eNBs and six relay apparatuses are exemplified, but any number of eNBs and relay apparatuses may be provided.

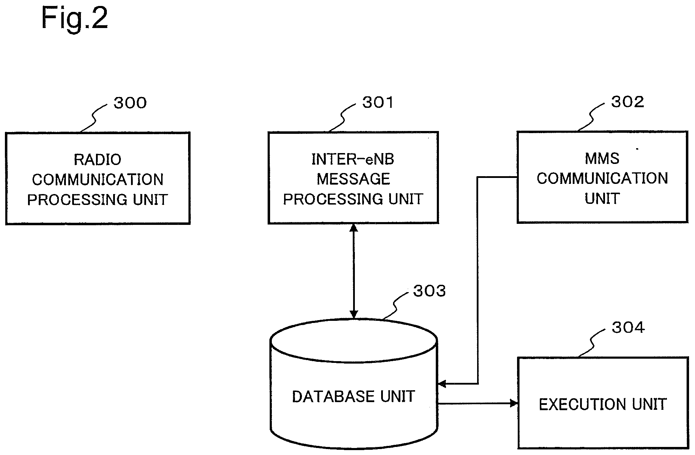

Fig. 2 is a block diagram illustrating a configuration of the first exemplary embodiment of a radio base station according to the present invention. As illustrated in Fig. 2, the radio base stations (eNBs 211 to 213) each include a radio communication processing unit 300, an inter-eNB message processing unit 301, an NMS communication unit 302, a database unit 303, and an execution unit 304.

The radio communication processing unit 300 communicates to a mobile terminal, for example, a radio terminal.

The inter-eNB message processing unit 301 transmits and receives information (hereinafter, referred to as handover information) necessary to handover a cell where a mobile terminal is located.

The NMS communication unit 302 communicates to the NMS 201 via an interface communicable to the NMS 201. In the present exemplary embodiment, the NMS communication unit 302 receives, from the NMS 201, information (hereinafter, referred to as backhaul resource load information) indicating a backhaul resource load in a bottleneck link. The bottleneck link is a link having the highest load between an eNB and an EPC.

The database unit 303 holds backhaul resource load information received by the NMS communication unit 302. Further, the database unit 303 holds, as handover information, information on a terminal located in a cell of an own station, information on the own station, information on an adjacent eNB, and the like. These pieces of information held by the database unit 303 are updated by the inter-eNB message processing unit 301 and the NMS communication unit 302, as needed.

The execution unit 304 executes MLB on the basis of the information held by the database unit 303.

It should be noted that the radio communication processing unit 300, the inter-eNB message processing unit 301, the NMS communication unit 302, and the execution unit 304 are realized, for example, using a CPU (Central Processing Unit) of a computer operating in accordance with a program. The CPU reads a program from a storage apparatus (not illustrated) and operates as the radio communication processing unit 300, the inter-eNB message processing unit 301, the NMS communication unit 302, and the execution unit 304 in accordance with the program. Further, the radio communication processing unit 300, the inter-eNB message processing unit 301, the NMS communication unit 302, and the execution unit 304 may be realized using separate pieces of hardware, respectively.

Further, the database unit 303 is realized using a storage apparatus such as a RAM (Random Access Memory) of a computer, or the like.

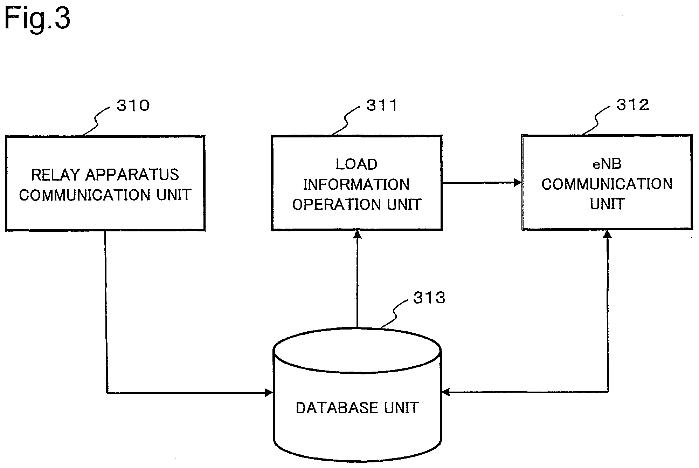

Fig. 3 is a block diagram illustrating a configuration of the first exemplary embodiment of a management control apparatus according to the present invention. As illustrated in Fig. 3, the management control apparatus (NMS 201) includes a relay apparatus communication unit 310, a load information operation unit 311, an eNB communication unit 312, and a database unit 313.

The relay apparatus communication unit 310 receives backhaul resource load information for each link from respective relay apparatuses connected to an own apparatus. As one example of a unit of a value indicated by the backhaul resource load information, a bit rate (bps) or the number of transferred bytes (MB, GB) per unit time is cited.

The load information operation unit 311 normalizes the backhaul resource load information of each link to percentage of a physical speed of the link. The load information operation unit 311 extracts a link having the highest load, i.e. a bottleneck link between an eNB and the EPC 240 for each eNB on the basis of the normalized backhaul resource load information.

The eNB communication unit 312 transmits backhaul resource load information of the bottleneck link extracted for each eNB to a corresponding eNB. At that time, the eNB communication unit 312 transmits a value indicated by the backhaul resource load information of the bottleneck link to the eNBs 211 to 213 via mapping to (association with) an index of any one of four stages ("LowLoad," "MediumLoad," "HighLoad," and "Overload"), in the similar manner as for S1 network load information.

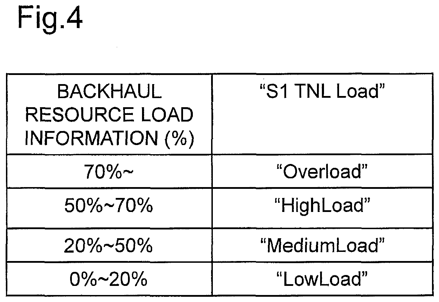

Fig. 4 is an illustrative diagram illustrating one example of information representing a conversion algorism to convert backhaul resource load information to S1 network load information. It should be noted that information representing the conversion algorism illustrated in Fig. 4 is stored in advance on a storage unit (not illustrated) included in the NMS 201. In the example illustrated in Fig. 4, when a value indicated by backhaul resource load information is equal to or greater than 70%, the value is associated to be converted to "Overload." Further, when a value indicated by backhaul resource load information is equal to or greater than 50% and smaller than 70%, the value is associated to be converted to "HighLoad." Further, when a value indicated by backhaul resource load information is equal to or greater than 20% and smaller than 50%, the value is associated to be converted to "MediumLoad." Further, when a value indicated by backhaul resource load information is equal to or greater than 0% and smaller than 20%, the value is associated to be converted to "LowLoad."

The database unit 313 holds backhaul resource load information of respective links between an eNB and an EPC and mapping information of the eNB and the EPC for the respective links. These pieces of information held by the database unit 313 are updated by the relay apparatus communication unit 310 and the eNB communication unit 312, as needed.

It should be noted that the relay apparatus communication unit 310, the load information operation unit 311, and the eNB communication unit 312 are realized, for example, using a CPU of a computer operating in accordance with a program. The CPU reads a program from a storage apparatus (not illustrated) and operates as the relay apparatus communication unit 310, the load information operation unit 311, and the eNB communication unit 312 in accordance with the program. Further, the relay apparatus communication unit 310, the load information operation unit 311, and the eNB communication unit 312 may be realized using separate pieces of hardware, respectively.

Further, the database unit 313 is realized using a storage apparatus such as a RAM (Random Access Memory) of a computer, or the like.

Next, operations of respective units in the present exemplary embodiment will be described.

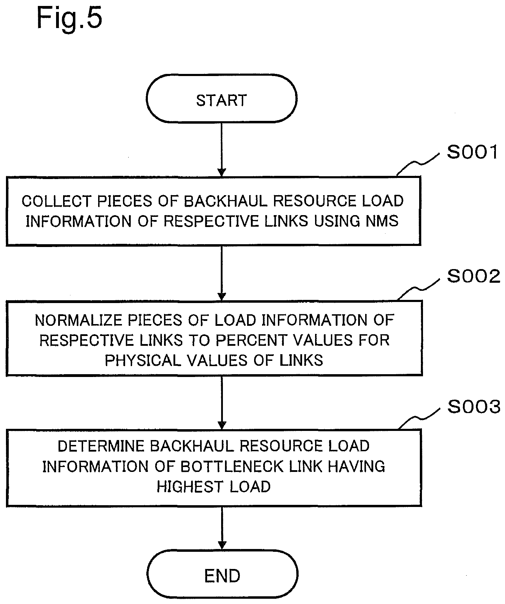

Fig. 5 is a flowchart illustrating operations from collecting backhaul resource load information of respective links for an eNB to extracting a bottleneck link using the NMS 201.

The relay apparatus communication unit 310 of the NMS 201 collects pieces of backhaul resource load information of respective links for an eNB (step S001). The relay apparatus communication unit 310 collects, when collecting, for example, pieces of backhaul resource load information of respective link for the eNB 211, pieces of backhaul resource load information of a link 231, a link 232, a link 233, a link 234, and a link 235.

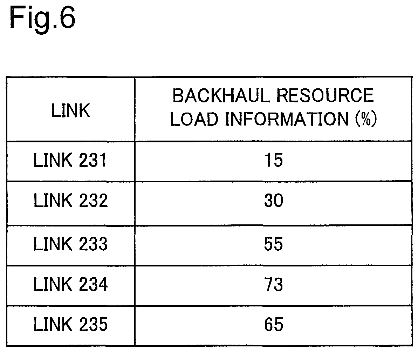

The load information operation unit 311 normalizes the pieces of backhaul resource load information of the respective links to percentage of physical speeds of the links (step S002). Fig. 6 is an illustrative diagram illustrating one example of backhaul resource load information of respective links between the eNB 211 and an EPC. Fig. 6 illustrates backhaul resource load information normalized to percentage.

The load information operation unit 311 determines, as a bottleneck link, a link in which a value indicated by the normalized backhaul resource load information is the largest (step S003). At that time, the load information operation unit 311 may extract, as a bottleneck link, a link having the highest load (the largest value indicated by backhaul resource load information) among links from an eNB to an Nth-hop, instead of all links between the eNB and the EPC.

The load information operation unit 311 may extract, as a bottleneck link, a link having the highest load, for example, among links from an eNB to SeGW (Security Gateway) that is an entrance of an operator network or, for example, among links from an eNB to a thin link that is a link likely to be relatively congested in a backhaul network. Herein, the load information operation unit 311 extracts a link having the highest load among links (the links 231 to 233) in an access area and an aggregation area. As illustrated in Fig. 6, a link having the highest load among the links (the links 231 to 233) in the access area and the aggregation area is the link 233 in which a value indicated by backhaul resource load information is "55%."

The eNB communication unit 312 associates the value indicated by the backhaul resource load information of the link 233 with the same index as for S1 network load information in accordance with information representing the conversion algorism exemplified in Fig. 4. Specifically, the eNB communication unit 312 converts the value "55%" indicated by the backhaul resource load information of the link 233 to "HighLoad." Then, the eNB communication unit 312 transmits the backhaul resource load information after the conversion to the eNB 211.

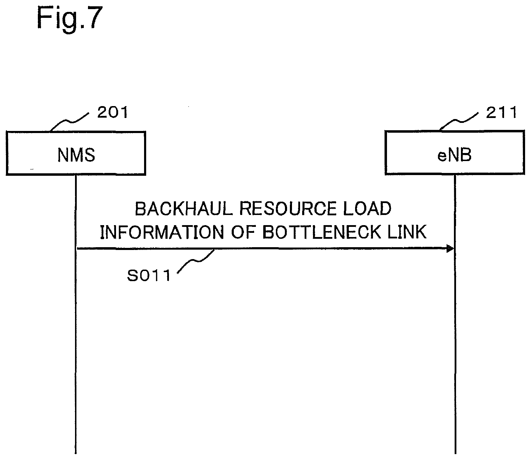

Fig. 7 is a sequence diagram illustrating an operation for transmitting the backhaul resource load information after the conversion to the eNB 211 using the NMS 201.

As illustrated in Fig. 7, the NMS 201, specifically, the eNB communication unit 312 transmits backhaul resource load information of a bottleneck link to the eNB 211. Herein, the eNB communication unit 312 transmits "HighLoad" to the eNB 211 as the backhaul resource load information of the bottleneck link (step S011).

Upon receiving the backhaul resource load information of the bottleneck link, the eNB 211, specifically, the NMS communication unit 302 stores the received backhaul resource load information on the database unit 303. Further, the NMS communication unit 302 transmits a resource status update message including S1 network load information set with "HighLoad" to an adjacent eNB (e.g. the eNB 212 illustrated in Fig. 1). It should be noted that it may be configured the inter-eNB message processing unit 301 transmits the resource status update message including S1 network load information set with "HighLoad" to an adjacent eNB (e.g. the eNB 212 illustrated in Fig. 1).

In the similar manner, the eNB 212 receives the backhaul resource load information of the bottleneck link transmitted from the NMS 201. When receiving, for example, backhaul resource load information indicating "LowLoad," the eNB 212 transmits a resource status update message including S1 network load information set with "LowLoad" to an adjacent eNB (e.g. the eNB 211).

Upon receiving a resource status update message from the adjacent eNB, the inter-eNB message processing unit 301 of each eNB stores backhaul resource load information included in the message on the database unit 303. Then, the execution unit 304 of each eNB executes MLB on the basis of the information held by the database unit 303.

In this manner, when the inter-eNB message processing unit 301 of each eNB transmits a resource status update message, eNBs can share backhaul resource load information of a bottleneck link between each eNB and the EPC 240. Therefore, this enables the execution unit 304 of each eNB to designate a cell of an adjacent eNB having a lower traffic load of a bottleneck link as a handover destination. In other words, it is possible to execute MLB considering a backhaul resource load of a link located ahead of an access link.

As described above, in the present exemplary embodiment, an NMS collects backhaul resource load information of respective links from an eNB to an EPC. Then, a bottleneck link is extracted on the basis of the collected backhaul resource load information of the respective links and backhaul resource load information of the extracted bottleneck link is transmitted to eNBs. Thereby, the eNBs can accurately acquire backhaul resource load information of a link having the highest load (bottleneck link) in an access link and an aggregation link.

Further, in the present exemplary embodiment, each eNB reports backhaul resource load information of a bottleneck link between an own station and an EPC received from an NMS to an adjacent eNB on the basis of a resource status update message. Thereby, each eNB can acquire backhaul resource load information of a bottleneck link between the adjacent eNB and an EPC. Therefore, it is possible to cause Handover between eNBs in MLB to succeed more certainly. Therefore, it is possible to avoid backhaul congestion of an access link and an aggregation link and a throughput decrease of a radio terminal. In other words, MLB can be executed by considering a congestion status of a backhaul.

Further, in the present exemplary embodiment, a load information operation unit of an NMS may be configured to extract, as a bottleneck link, a link having the highest load among links from an eNB to an Nth-hop, instead of links from the eNB to an EPC. Such a configuration makes it possible to extract a bottleneck link in a necessary range to avoid backhaul congestion and a throughput decrease of a radio terminal and reduce a load of extraction processing of the bottleneck link in the NMS.

It should be noted that the present exemplary embodiment has been described, as an example, in which the eNB communication unit 312 of the NMS 201 converts backhaul resource load information of a bottleneck link to the same index as for S1 network load information, but each eNB may execute this conversion. To realize such a form, the eNB communication unit 312 may transmit backhaul resource load information of a bottleneck link normalized to percentage to each eNB. Then, each eNB (e.g. the NMS communication unit 302 of each eNB) may convert the backhaul resource load information normalized to the percentage to an index of any one of the same four stages as for S1 network load information and store the resulting index on the database unit 303. In this case, information representing the conversion algorism exemplified in Fig. 4 is stored in advance on a storage unit (not illustrated) included in each eNB.

Further, the eNB communication unit 312 of the NMS 201 may transmit backhaul resource load information of a bottleneck link to control apparatuses (SON (Self Organizing Network)/EMS (Element Management System)/HeNB-GW (Home eNB-Gateway)) that manage eNBs.

Further, the relay apparatus communication unit 310 of the NMS 201 may acquire backhaul resource load information of respective links from an eNB to an Nth-hop, instead of acquiring backhaul resource load information of all links between the eNB to an EPC. Then, the load information operation unit 311 may extract a bottleneck link from the respective links from the eNB to the Nth-hop and the eNB communication unit 312 transmits backhaul resource load information of the bottleneck link to eNBs. In this manner, when backhaul resource load information is acquired in a range necessary to avoid backhaul congestion and a throughput decrease of a radio terminal, a processing load of the NMS 201 can be reduced.

### Second Exemplary Embodiment

A second exemplary embodiment of the present invention will be described with reference to the drawings.

A configuration of a communication system in the second exemplary embodiment is the same as the configuration of the first exemplary embodiment illustrated in Fig. 1.

However, the eNB communication unit 312 of the NMS 201 of the present exemplary embodiment transmits pieces of backhaul resource load information of respective links in a backhaul between each eNB and an EPC 240 and physical speeds of the respective links to eNBs. Then, each eNB normalizes the pieces of backhaul resource load information of the respective links to percentage of the physical speeds of the links.

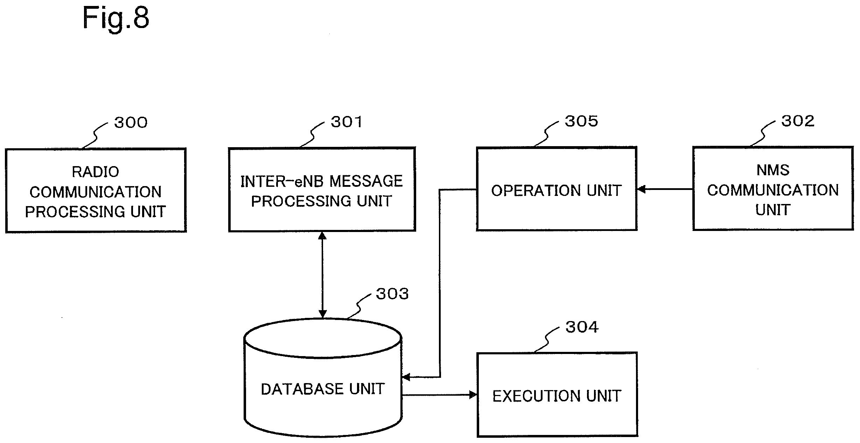

Fig. 8 is a block diagram illustrating a configuration of the second exemplary embodiment of a radio base station according to the present invention. As illustrated in Fig. 8, each eNB includes an operation unit 305 in addition to the configuration of the first exemplary embodiment illustrated in Fig. 2.

The NMS communication unit 302 of each eNB receives pieces of backhaul resource load information of respective links in a backhaul between an own station and the EPC 240 and physical speeds of the respective links. Then, the operation unit 305 normalizes values indicated by the pieces of backhaul resource load information of the respective links to percentage of the physical values of the respective links. Further, the operation unit 305 extracts a bottleneck link between an own station and the EPC 240 on the basis of values indicated by the normalized pieces of backhaul resource load information of the respective links and stores backhaul resource load information of the extracted bottleneck link on the database unit 303.

It should be noted that the radio communication processing unit 300, the inter-eNB message processing unit 301, the NMS communication unit 302, the execution unit 304, and the operation unit 305 are realized, for example, using a CPU of a computer operating in accordance with a traffic load distribution program. The traffic load distribution program is stored, for example, on a storage apparatus (not illustrated) of the computer. The CPU reads the program and operates as the radio communication processing unit 300, the inter-eNB message processing unit 301, the NMS communication unit 302, the execution unit 304, and the operation unit 305 in accordance with the program. Further, the radio communication processing unit 300, the inter-eNB message processing unit 301, the NMS communication unit 302, the execution unit 304, and the operation unit 305 may be realized using separate pieces of hardware.

In this manner, in the present exemplary embodiment, the operation unit 305 of each eNB normalizes values indicated by pieces of backhaul resource load information of respective links and extracts a bottleneck link. Therefore, it is only necessary for the NMS 201 to transmit pieces of backhaul resource load information of respective links and physical speeds of the respective links to eNBs. Therefore, a general-purpose management apparatus that manages links between eNBs and a mobile core network becomes usable as the NMS 201.

### Third Exemplary Embodiment

A third exemplary embodiment of the present invention will be described with reference to the drawings.

A configuration of a communication system in the third exemplary embodiment is the same as in the first exemplary embodiment.

However, the eNB communication unit 312 of the NMS 201 of the present exemplary embodiment transmits, to eNBs, backhaul resource load information of respective links between an eNB and an EPC and backhaul resource load information of a link from the eNB to a first-hop, in addition to backhaul resource load information of a bottleneck link.

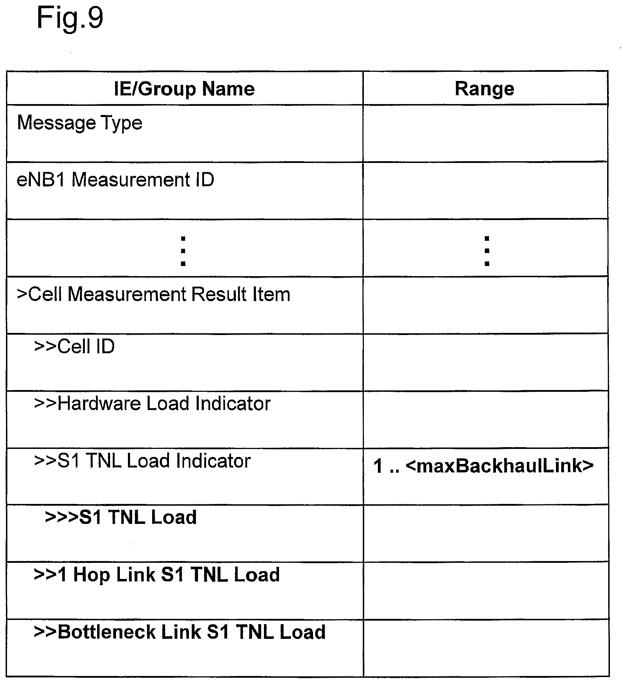

Further, the inter-eNB message processing unit 301 of each eNB designates backhaul resource load information ("S1 TNL Load") of respective links between an eNB and an EPC, backhaul resource load information ("1 Hop Link S1 TNL Load") of a link from an eNB to a first-hop, and backhaul resource load information ("Bottleneck Link S1 TNL Load") of a bottleneck link as additive IEs (Information Elements) of a resource status update message between X2 links. Fig. 9 is an illustrative diagram illustrating one example of a structure of a resource status request message designated with additive IEs.

In this manner, in the present exemplary embodiment, each eNB receives, from an NMS, backhaul resource load information of respective links between an eNB and an EPC and backhaul resource load information of a link from the eNB to a first-hop, in addition to backhaul resource load information of a bottleneck link. This enables an eNB to acquire more accurate backhaul resource load information from the NMS. Further, in the present exemplary embodiment, eNBs share information received by each eNB from the NMS. This enables each eNB to acquire more accurately backhaul resource load information of links between an adjacent eNB and the EPC.

It should be noted that the eNB communication unit 312 of the NMS 201 may transmit, to an eNB, backhaul resource load information of respective links between the eNB and the EPC and respective links between an eNB adjacent to the eNB and the EPC.

Further, the eNB communication unit 312 may extract a bottleneck link from respective links from an eNB to an Nth-hop. Then, it is possible to transmit backhaul resource load information of the bottleneck link to eNBs, together with backhaul resource load information of the respective links between the eNB to the Nth-hop and backhaul resource load information of a link from the eNB to a first-hop.

While the invention has been particularly shown and described with reference to exemplary embodiments thereof, the invention is not limited to these embodiments. It will be understood by those of ordinary skill in the art that various changes in form and details may be made therein without departing from the scope of the present invention as defined by the claims.

Next, a summary of the present invention will be described.

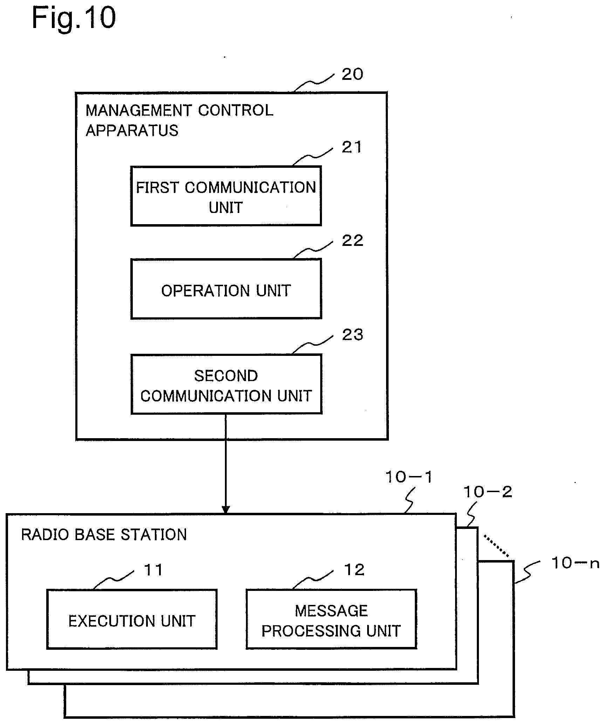

Fig. 10 is a block diagram illustrating a minimal configuration of the communication system according to the present invention. As illustrated in Fig. 10, the communication system according to the present invention includes radio base stations 10-1 to 10-n (equivalent to the eNBs 211 to 213 illustrated in Fig. 1) and a management control apparatus 20 (equivalent to the NMS 201 illustrated in Fig. 1); the management control apparatus 20 includes a first communication unit 21 (equivalent to the relay apparatus communication unit 310 illustrated in Fig. 3) that collects backhaul resource load information indicating traffic loads of respective links in backhauls between the radio base stations 10-1 to 10-n and a core network from relay apparatuses (equivalent to the relay apparatuses 221 to 226 illustrated in Fig. 1) that relay communications between the radio base stations 10-1 to 10-n and the core network, an operation unit 22 (equivalent to the load information operation unit 311 illustrated in Fig. 3) that extracts, for each radio base station, a bottleneck link having the highest load among respective links in a backhaul between a radio base station and the core network on the basis of the backhaul resource load information collected by the first communication unit 21, and a second communication unit 23 (equivalent to the eNB communication unit 312 illustrated in Fig. 3) that transmits backhaul resource load information of the bottleneck link to the radio base stations 10-1 to 10-n; and the radio base stations 10-1 to 10-n each include an execution unit 11 (equivalent to the execution unit 304 and, illustrated in Fig. 2) that executes distribution of the traffic loads among the radio base stations on the basis of the backhaul resource load information of the bottleneck link in a backhaul between an own base station and the core network received from the management control unit 20.

Such a configuration enables a radio base station to accurately acquires backhaul resource load information of a link (bottleneck link) having the highest load in an access link and an aggregation link. Therefore, MLB can be executed by considering a congestion status of a backhaul.

Further, the operation unit 22 may normalize a value indicated by backhaul resource load information of each link to a percentage of a physical speed of the each link. Such a configuration makes it possible to apply the present invention also to a radio communication network in which physical speeds of respective links are different from each other.

Further, the operation unit 22 may extract a bottleneck link on the basis of normalized backhaul resource load information of respective links. Such a configuration makes it possible to accurately extract a bottleneck link even when physical speeds of the respective links are different from each other.

Further, the radio base stations 10-1 to 10-n each may include a message processing unit 12 (equivalent to the inter-eNB message processing unit 301 illustrated in Fig. 2) that transmits backhaul resource load information of a bottleneck link in a backhaul between an own station and a core network received from the management control apparatus 20 to an adjacent radio base station. Such a configuration enables the radio base stations to share the backhaul resource load information of the bottleneck link. Therefore, traffic loads among the radio base stations can be distributed more certainly.

Further, the operation unit 22 may extract a link having the highest load among respective links from a radio base station to an Nth-hop as a bottleneck link. According to such a configuration, since a bottleneck link is extracted in a necessary range to avoid backhaul congestion and a throughput decrease of a radio terminal, a load of extraction processing of a bottleneck link in a management control apparatus can be reduced.

Further, the execution unit 11 may execute Handover on the basis of backhaul resource load information of a bottleneck link in a backhaul between an own station and a core network and backhaul resource load information of a bottleneck link, received by the message processing unit 12 from an adjacent radio base station, in a backhaul between the adjacent radio base station and the core network. With such a configuration, Handover between radio base stations based on MLB can be successfully performed more certainly. Therefore, backhaul congestion of an access link and an aggregation link and a throughput decrease of a radio terminal can be avoided more certainly.

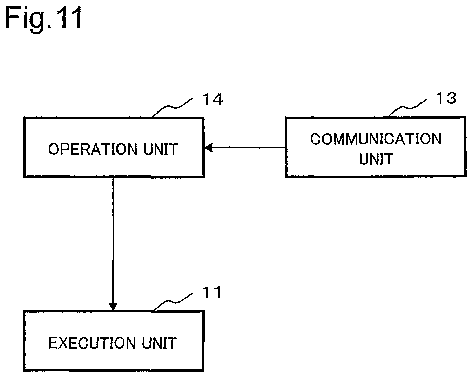

Fig. 11 is a block diagram illustrating a minimal configuration of the radio base station according to the present invention. As illustrated in Fig. 11, the radio base station according to the present invention includes: a communication unit 13 (equivalent to the NMS communication unit 302 illustrated in Fig. 8) that receives backhaul resource load information of respective links in a backhaul between an own station and a core network from the management control apparatus 20 that manages communication resources in a backhaul between radio base stations and the core network; an operation unit 14 (equivalent to the operation unit 305 illustrated in Fig. 8) that extracts a bottleneck link having the highest load among the respective links in the backhaul between an own station and the core network on the basis of the backhaul resource load information received from the management control apparatus 20; and an execution unit 11 that executes distribution of traffic loads among the radio base stations on the basis of backhaul resource load information of the bottleneck link.

The whole or part of the exemplary embodiments disclosed above can be described as, but not limited to, the following supplementary notes.

(Supplementary note 1) A communication system comprising radio base stations and a management control apparatus, wherein
the management control apparatus includes:
a first communication means for collecting backhaul resource load information indicating traffic loads of respective links in a backhaul between the radio base stations and a core network from relay apparatuses that relay communications between the radio base stations and the core network;
an operation means for extracting, for each radio base station, a bottleneck link having the highest load among respective links in a backhaul between a radio base station and the core network on the basis of the backhaul resource load information collected by the first communication means; and
a second communication means for transmitting backhaul resource load information of the bottleneck link to the radio base stations, and
the radio base station includes
an execution means for executing distribution of traffic loads among the radio base stations on the basis of backhaul resource load information of a bottleneck link in a backhaul between an own station and the core network received from the management control apparatus.

(Supplementary note 2) The communication system according to Supplementary note 1, wherein
the operation means normalizes pieces of backhaul resource load information of respective links to percentage of physical speeds of the respective links.

(Supplementary note 3) The communication system according to Supplementary note 2, wherein
the operation means extracts a bottleneck link on the basis of the normalized pieces of backhaul resource load information of the respective links.

(Supplementary note 4) The communication system according to any one of Supplementary note 1 to Supplementary note 3, wherein
the radio base station comprises a message processing means for transmitting backhaul resource load information of a bottleneck link in a backhaul between an own station and a core network to an adjacent radio base station, the information being received from the management control apparatus.

(Supplementary note 5) The communication system according to Supplementary note 4, wherein
the execution means executes handover on the basis of backhaul resource load information of a bottleneck link in a backhaul between an own station and a core network and backhaul resource load information of a bottleneck link, received by the message processing means from an adjacent radio base station, in a backhaul between the adjacent radio base station and the core network.

(Supplementary note 6) The communication system according to any one of Supplementary note 1 to Supplementary note 5, wherein the operation means transmits, to the radio base station, backhaul resource load information of a bottleneck link associated with an index of "S1 TNL Load" in a RESOURCE STATUS UPDATE message specified in technical specifications (TS 36.423 Version 11.5.0).

(Supplementary note 7) The communication system according to any one of Supplementary note 1 to Supplementary Note 6, wherein the operation means extracts, as a bottleneck link, a link having the highest load among respective links from the radio base station to an Nth-hop.

(Supplementary note 8) The communication system according to any one of Supplementary note 1 to Supplementary note 6, wherein the second communication means of the management control apparatus transmits, to the radio base station together with backhaul resource load information of a bottleneck link between the radio base station and a core network, backhaul resource load information of respective links between the radio base station and the core network and backhaul resource load information of a link from the radio base station to a first-hop; and the execution means of the radio base station transmits, to an adjacent radio base station, backhaul resource load information of a bottleneck link between an own station and the core network, backhaul resource load information of respective links between an own station and the core network, and backhaul resource load information of a link from the own station to a first-hop received from the management control apparatus.

(Supplementary note 9) A radio base station comprising:
a communication means for receiving, from a management control apparatus that manages communication resources in a backhaul between radio base stations and a core network, backhaul resource load information of respective links in a backhaul between an own station and the core network;
an operation means for extracting a bottleneck link having the highest load among respective links in a backhaul between an own station and the core network on the basis of the backhaul resource load information received from the management control apparatus; and
an execution means for executing distribution of traffic loads among the radio base stations on the basis of backhaul resource load information of the bottleneck link.

(Supplementary note 10) The radio base station according to Supplementary note 9, wherein the communication means receives, together with pieces of backhaul resource load information of respective links in a backhaul between an own station and the core network, pieces of information indicating physical speeds of the respective links from the management control apparatus; and the operation means normalizes the pieces of backhaul resource load information of the respective links to percentage of the physical speeds of the respective links on the basis of pieces of information indicating the physical speeds of the respective links.

(Supplementary note 11) The radio base station according to Supplementary note 10, wherein
the operation means extracts a bottleneck link on the basis of the normalized pieces of backhaul resource load information of the respective links.

(Supplementary note 12) The radio base station according to any one of Supplementary note 9 to Supplementary note 11, including
a message processing means for transmitting backhaul resource load information of a bottleneck link in a backhaul between an own station and a core network to an adjacent radio base station.

(Supplementary note 13) The radio base station according to Supplementary note 12, wherein
the execution means executes handover on the basis of backhaul resource load information of a bottleneck link in a backhaul between an own station and a core network and backhaul resource load information of a bottleneck link, received by the message processing means from an adjacent radio base station, in a backhaul between the adjacent radio base station and the core network.

(Supplementary note 14) The radio base station according to any one of Supplementary note 9 to Supplementary note 12, wherein the operation means extracts, as a bottleneck link, a link having the highest load among respective links from a radio base station to an Nth-hop radio base station.

This application is based upon and claims the benefit of priority from Japanese patent application No. 2013-222923, filed on October 28, 2013.

### [Reference signs List]

10-1 to 10-n Radio base station
11 Execution unit
12 Message processing unit
13 Communication unit
14 Operation unit
20 Management control apparatus
21 First communication unit
22 Operation unit
23 Second communication unit
100, 240 EPC
101, 102, 221 to 226 Relay apparatus
103 to 105, 211 to 213 eNB
106 Radio terminal
107, 108, 109 Cell
111 to 115, 231 to 235 Link
201 NMS
300 Radio communication processing unit
301 Inter-eNB message processing unit
302 NMS communication unit
303 Database unit
304 Execution unit
305 Operation unit
310 Relay apparatus communication unit
311 Load information operation unit
312 eNB communication unit
313 Database unit

## Claims

1. A communication system comprising radio base stations (211, 212, 213) and a management control apparatus (201), wherein
the management control apparatus (201) includes:
a first communication means (21) for collecting backhaul resource load information indicating traffic loads of respective links in a backhaul between the radio base stations (211, 212, 213) and a core network (240) from relay apparatuses (221, 222) that relay communications between the radio base stations (211, 212, 213) and the core network (240);
an operation means (22) for extracting, for each radio base station (211, 212, 213), a bottleneck link having the highest load among respective links in a backhaul between a radio base station (211, 212, 213) and the core network (240) on the basis of the backhaul resource load information collected by the first communication means (21); and
a second communication means (23) for transmitting backhaul resource load information of the bottleneck link to the radio base stations (211, 212, 213); and
each radio base station (211, 212, 213) includes:
an execution means (11) for executing distribution of traffic loads among the radio base stations (211, 212, 213) on the basis of backhaul resource load information of a bottleneck link in a backhaul between an own station and the core network (240) received from the management control apparatus (201).

2. The communication system according to Claim 1, wherein
the operation means (22) normalizes pieces of backhaul resource load information of respective links to percentage of physical speeds of the respective links.

3. The communication system according to Claim 2, wherein
the operation means (22) extracts a bottleneck link on the basis of the normalized pieces of backhaul resource load information of the respective links.

4. The communication system according to any one of Claim 1 to Claim 3, wherein
the operation means (22) extracts, as a bottleneck link, a link having the highest load among respective links from the radio base station to an Nth-hop.

5. The communication system according to any one of Claim 1 to Claim 4, wherein
the radio base station comprises a message processing means (12) for transmitting backhaul resource load information of a bottleneck link in a backhaul between an own station and a core network to an adjacent radio base station, the information being received from the management control apparatus (201).

6. The communication system according to Claim 5, wherein
the execution means (11) executes handover on the basis of backhaul resource load information of a bottleneck link in a backhaul between an own station and a core network and backhaul resource load information of a bottleneck link, received by the message processing means (12) from an adjacent radio base station, in a backhaul between the adjacent radio base station and the core network.

7. A radio base station (10-1) comprising:
a communication means for receiving, from a management control apparatus (201) that manages communication resources in a backhaul between radio base stations (211, 212, 213) and a core network, backhaul resource load information of respective links in a backhaul between an own station and the core network;
an operation means (14) for extracting a bottleneck link having the highest load among respective links in a backhaul between an own station and the core network on the basis of the backhaul resource load information received from the management control apparatus (201); and
an execution means (11) for executing distribution of traffic loads among the radio base stations (211, 212, 213) on the basis of backhaul resource load information of the bottleneck link.

8. A traffic load distribution method comprising:
receiving, from a management control apparatus (201) that manages communication resources in a backhaul between radio base stations (211, 212, 213) and a core network, backhaul resource load information of respective links in a backhaul between an own station and the core network;
extracting a bottleneck link having the highest load among respective links in a backhaul between an own station and the core network on the basis of the backhaul resource load information received from the management control apparatus (201); and
executing distribution of traffic loads among the radio base stations (211, 212, 213) on the basis of backhaul resource load information of the bottleneck link.

9. A storage medium storing a traffic load distribution program that causes a computer to execute:
processing for receiving, from a management control apparatus (201) that manages communication resources in a backhaul between radio base stations (211, 212, 213) and a core network, backhaul resource load information of respective links in a backhaul between an own station and the core network;
processing for extracting a bottleneck link having the highest load among respective links in a backhaul between an own station and the core network on the basis of the backhaul resource load information received from the management control apparatus (201); and
processing for executing distribution of traffic loads among the radio base stations (211, 212, 213) on the basis of backhaul resource load information of the bottleneck link.

## Patentansprüche

1. Kommunikationssystem mit Funkbasisstationen (211, 212, 213) und einer Managementsteuervorrichtung (201), wobei
die Managementsteuervorrichtung (201) aufweist:
eine erste Kommunikationseinrichtung (21) zum Sammeln von Backhaul-Ressourcen-Lastinformation, die Verkehrslasten jeweiliger Verbindungen in einem Backhaul zwischen den Funkbasisstationen (211, 212, 213) und einem Kernnetzwerk (240) anzeigt, von Relaisvorrichtungen (221, 222), die Kommunikationen zwischen den Funkbasisstationen (211, 212, 213) und dem Kernnetzwerk (240) übermitteln;
eine Operationseinrichtung (22) zum Extrahieren einer Engpassverbindung mit der höchsten Last unter jeweiligen Verbindungen in einem Backhaul zwischen einer Funkbasisstation (211, 212, 213) und dem Kernnetzwerk (240) auf der Basis der durch die erste Kommunikationseinrichtung (21) gesammelten Backhaul-Ressourcen-Lastinformation für jede Funkbasisstation (211, 212, 213); und
eine zweite Kommunikationseinrichtung (23) zum Übertragen von Backhaul-Ressourcen-Lastinformation der Engpassverbindung an die Funkbasisstationen (211, 212, 213); und
wobei jede Funkbasisstation (211, 212, 213) aufweist:
eine Ausführungseinrichtung (11) zum Ausführen einer Verteilung von Verkehrslasten unter den Funkbasisstationen (211, 212, 213) auf der Basis von Backhaul-Ressourcen-Lastinformation einer Engpassverbindung in einem Backhaul zwischen einer eigenen Station und dem Kernnetzwerk (240), die von der Managementsteuervorrichtung (201) empfangen wird.

2. Kommunikationssystem nach Anspruch 1, wobei
die Operationseinrichtung (22) Teile von Backhaul-Ressourcen-Lastinformation jeweiliger Verbindungen auf einen Prozentsatz physikalischer Geschwindigkeiten der jeweiligen Verbindungen normiert.

3. Kommunikationssystem nach Anspruch 2, wobei
die Operationseinrichtung (22) eine Engpassverbindung auf der Basis der normierten Teile von Backhaul-Ressourcen-Lastinformation der jeweiligen Verbindungen extrahiert.

4. Kommunikationssystem nach einem der Ansprüche 1 bis 3, wobei
die Operationseinrichtung (22) als eine Engpassverbindung eine Verbindung mit der höchsten Last unter jeweiligen Verbindungen von der Funkbasisstation zu einem N-ten Hop extrahiert.

5. Kommunikationssystem nach einem der Ansprüche 1 bis 4, wobei
die Funkbasisstation eine Nachrichtenverarbeitungseinrichtung (12) zum Übertragen von Backhaul-Ressourcen-Lastinformation einer Engpassverbindung in einem Backhaul zwischen einer eigenen Station und einem Kernnetzwerk an eine benachbarte Funkbasisstation aufweist, wobei die Information von der Managementsteuervorrichtung (201) empfangen wird.

6. Kommunikationssystem nach Anspruch 5, wobei
die Ausführungseinrichtung (11) ein Handover auf der Basis von Backhaul-Ressourcen-Lastinformation einer Engpassverbindung in einem Backhaul zwischen einer eigenen Station und einem Kernnetzwerk und Backhaul-Ressourcen-Lastinformation einer Engpassverbindung, die durch die Nachrichtenverarbeitungseinrichtung (12) von einer benachbarten Funkbasisstation empfangen wird, in einem Backhaul zwischen der benachbarten Funkbasisstation und dem Kernnetzwerk ausführt.

7. Funkbasisstation (10-1) mit:
einer Kommunikationseinrichtung zum Empfangen von Backhaul-Ressourcen-Lastinformation jeweiliger Verbindungen in einem Backhaul zwischen einer eigenen Station und dem Kernnetzwerk von einer Managementsteuervorrichtung (201), die Kommunikationsressourcen in einem Backhaul zwischen Funkbasisstationen (211, 212, 213) und einem Kernnetzwerk managt;
einer Operationseinrichtung (14) zum Extrahieren einer Engpassverbindung mit der höchsten Last unter jeweiligen Verbindungen in einem Backhaul zwischen einer eigenen Station und dem Kernnetzwerk auf der Basis der von der Managementsteuervorrichtung (201) empfangenen Backhaul-Ressourcen-Lastinformation; und
einer Ausführungseinrichtung (11) zum Ausführen einer Verteilung von Verkehrslasten unter den Funkbasisstationen (211, 212, 213) auf der Basis von Backhaul-Ressourcen-Lastinformationen der Engpassverbindung.

8. Verkehrslastverteilungsverfahren mit den Schritten:
Empfangen von Backhaul-Ressourcen-Lastinformation jeweiliger Verbindungen in einem Backhaul zwischen einer eigenen Station und einem Kernnetzwerk von einer Managementsteuervorrichtung (201), die Kommunikationsressourcen in einem Backhaul zwischen Funkbasisstationen (211, 212, 213) und dem Kernnetzwerk managt;
Extrahieren einer Engpassverbindung mit der höchsten Last unter jeweiligen Verbindungen in einem Backhaul zwischen einer eigenen Station und dem Kernnetzwerk auf der Basis der von der Managementsteuervorrichtung (201) empfangenen Backhaul-Ressourcen-Lastinformation; und
Ausführen einer Verteilung von Verkehrslasten zwischen den Funkbasisstationen (211, 212, 213) auf der Basis von Backhaul-Ressourcen-Lastinformationen der Engpassverbindung.

9. Speichermedium, das ein Verkehrslastverteilungsprogramm speichert, das einen Computer veranlasst, auszuführen:
eine Verarbeitung zum Empfangen von Backhaul-Ressourcen-Lastinformation jeweiliger Verbindungen in einem Backhaul zwischen einer eigenen Station und einem Kernnetzwerk von einer Managementsteuervorrichtung (201), die Kommunikationsressourcen in einem Backhaul zwischen Funkbasisstationen (211, 212, 213) und dem Kernnetzwerk managt;
eine Verarbeitung zum Extrahieren einer Engpassverbindung mit der höchsten Last unter jeweiligen Verbindungen in einem Backhaul zwischen einer eigenen Station und dem Kernnetzwerk auf der Basis der Backhaul-Ressourcen-Lastinformation, die von der Managementsteuervorrichtung (201) empfangen wird; und
eine Verarbeitung zum Ausführen einer Verteilung von Verkehrslasten zwischen den Funkbasisstationen (211, 212, 213) auf der Basis einer Backhaul-Ressourcenlastinformation der Engpassverbindung.

## Revendications

1. Système de communication comprenant des stations de base radio (211, 212, 213) et un appareil de commande de gestion (201), dans lequel
l'appareil de commande de gestion (201) comporte :
un premier moyen de communication (21) pour collecter des informations de charge de ressources de liaison terrestre indiquant des charges de trafic de liaisons respectives dans une liaison terrestre entre les stations de base radio (211, 212, 213) et un réseau central (240) à partir d'appareils relais (221, 222) qui relaient des communications entre les stations de base radio (211, 212, 213) et le réseau central (240) ;
un moyen d'exploitation (22) pour extraire, pour chaque station de base radio (211, 212, 213), une liaison goulot d'étranglement ayant la charge la plus élevée parmi des liaisons respectives dans une liaison terrestre entre une station de base radio (211, 212, 213) et le réseau central (240) sur la base des informations de charge de ressources de liaison terrestre collectées par le premier moyen de communication (21) ; et
un second moyen de communication (23) pour transmettre des informations de charge de ressources de liaison terrestre de la liaison goulot d'étranglement aux stations de base radio (211, 212, 213) ; et
chaque station de base radio (211, 212, 213) comporte :
un moyen d'exécution (11) pour exécuter une distribution de charges de trafic entre les stations de base radio (211, 212, 213) sur la base d'informations de charge de ressources de liaison terrestre d'une liaison goulot d'étranglement dans une liaison terrestre entre une station propre et le réseau central (240) reçues en provenance de l'appareil de commande de gestion (201).

2. Système de communication selon la revendication 1, dans lequel
le moyen d'exploitation (22) normalise des éléments d'informations de charge de ressources de liaison terrestre de liaisons respectives à un pourcentage de vitesses physiques des liaisons respectives.

3. Système de communication selon la revendication 2, dans lequel
le moyen d'exploitation (22) extrait une liaison goulot d'étranglement sur la base des éléments normalisés d'informations de charge de ressources de liaison terrestre des liaisons respectives.

4. Système de communication selon l'une quelconque de la revendication 1 à la revendication 3, dans lequel
le moyen d'exploitation (22) extrait, en tant que liaison goulot d'étranglement, une liaison ayant la charge la plus élevée parmi des liaisons respectives de la station de base radio à un Nième saut.

5. Système de communication selon l'une quelconque de la revendication 1 à la revendication 4, dans lequel
la station de base radio comprend un moyen de traitement de message (12) pour transmettre des informations de charge de ressources de liaison terrestre d'une liaison goulot d'étranglement dans une liaison terrestre entre une station propre et un réseau central à une station de base radio adjacente, les informations étant reçues en provenance de l'appareil de commande de gestion (201).

6. Système de communication selon la revendication 5, dans lequel
le moyen d'exécution (11) exécute un transfert intercellulaire sur la base d'informations de charge de ressources de liaison terrestre d'une liaison goulot d'étranglement dans une liaison terrestre entre une station propre et un réseau central et d'informations de charge de ressources de liaison terrestre d'une liaison goulot d'étranglement, reçues par le moyen de traitement de message (12) en provenance d'une station de base radio adjacente, dans une liaison terrestre entre la station de base radio adjacente et le réseau central.

7. Station de base radio (10-1) comprenant :
un moyen de communication pour recevoir, en provenance d'un appareil de commande de gestion (201) qui gère des ressources de communication dans une liaison terrestre entre des stations de base radio (211, 212, 213) et un réseau central, des informations de charge de ressources de liaison terrestre de liaisons respectives dans une liaison terrestre entre une station propre et le réseau central ;
un moyen d'exploitation (14) pour extraire une liaison goulot d'étranglement ayant la charge la plus élevée parmi des liaisons respectives dans une liaison terrestre entre une station propre et le réseau central sur la base des informations de charge de ressources de liaison terrestre reçues en provenance de l'appareil de commande de gestion (201) ; et
un moyen d'exécution (11) pour exécuter une distribution de charges de trafic entre les stations de base radio (211, 212, 213) sur la base d'informations de charge de ressources de liaison terrestre de la liaison goulot d'étranglement.

8. Procédé de distribution de charges de trafic comprenant :
recevoir, en provenance d'un appareil de commande de gestion (201) qui gère des ressources de communication dans une liaison terrestre entre des stations de base radio (211, 212, 213) et un réseau central, des informations de charge de ressources de liaison terrestre de liaisons respectives dans une liaison terrestre entre une station propre et le réseau central ;
extraire une liaison goulot d'étranglement ayant la charge la plus élevée parmi des liaisons respectives dans une liaison terrestre entre une station propre et le réseau central sur la base des informations de charge de ressources de liaison terrestre reçues en provenance de l'appareil de commande de gestion (201) ; et
exécuter une distribution de charges de trafic entre les stations de base radio (211, 212, 213) sur la base d'informations de charge de ressources de liaison terrestre de la liaison goulot d'étranglement.

9. Support de stockage stockant un programme de distribution de charges de trafic qui amène un ordinateur à exécuter :
le traitement pour recevoir, en provenance d'un appareil de commande de gestion (201) qui gère des ressources de communication dans une liaison terrestre entre des stations de base radio (211, 212, 213) et un réseau central, des informations de charge de ressources de liaison terrestre de liaisons respectives dans une liaison terrestre entre une station propre et le réseau central ;
le traitement pour extraire une liaison goulot d'étranglement ayant la charge la plus élevée parmi des liaisons respectives dans une liaison terrestre entre une station propre et le réseau central sur la base des informations de charge de ressources de liaison terrestre reçues en provenance de l'appareil de commande de gestion (201) ; et
le traitement pour exécuter une distribution de charges de trafic entre les stations de base radio (211, 212, 213) sur la base d'informations de charge de ressources de liaison terrestre de la liaison goulot d'étranglement.
